# EUROPEAN PATENT SPECIFICATION

(11) **EP 2 416 669 B1**
(45) Date of publication and mention of the grant of the patent: **05.03.2014**
(21) Application number: 10727822.8
(22) Date of filing: 09.04.2010
(51) Int. Cl.: A23L 1/16

(54) **HIGH-YIELD QUICK-DRYING METHOD FOR "STABILISED CORE" DRY PASTA**
SCHNELLTROCKNUNGSVERFAHREN MIT HOHER AUSBEUTE FÜR STABILISIERTE KERNTROCKENE TEIGWAREN
PROCÉDÉ DE SÉCHAGE RAPIDE À RENDEMENT ÉLEVÉ POUR DES PÂTES SÈCHES « À C UR STABILISÉ »

(30) Priority: 10.04.2009 IT MI20090588
(43) Date of publication of application: 15.02.2012
(73) Proprietor: Fava S.p.A., 44042 Cento FE (IT)
(72) Inventor: FAVA, Enrico, I-44042 Cento (Ferrara) (IT); BIANCHI, Adolfo, I-40040 Dosso Di SantÁgostino (Ferrara) (IT)
(74) Representative: Lotti, Giorgio
(86) International application number: PCT/IB2010/000820
(87) International publication number: WO 2010/116254

(56) References cited:
- EP-A1- 0 253 307
- WO-A1-92/16806
- WO-A1-99/02044
- US-A- 5 026 567
- US-A- 5 405 634
- US-A- 5 456 931
- US-A- 5 517 905
- US-A- 5 573 804
- US-A1- 2009 011 099

## Description

The present invention relates to a high-yield, quick-drying method for long, short and speciality pasta.

US 5 405 634 discloses a novel process and a device for stabilizing the shape of both long and short pasta. A small amount of water, e.g. 0.4% to 1.2%, is added to the surface of the product while it is still hot in a water addition member at the end of the drying or climate zone and the product is then cooled in a cooling arrangement. The pasta are then stacked in the traditional manner for stabilizing insofar as this is required for the subsequent packaging process. In this way, subsequent cracking which was previously often unexplained can be avoided even when very extreme drying climates and short drying periods are used.

EP 0 253 307 discloses a process and an apparatus for desiccating food products such as pasta. The process involves one or more steps of rapid desiccation with high surface evaporation followed by one or more steps of atomization of water on the product and on its surrounding environment. This allows humidification of the surface layer of the product and facilitates a homogeneous redistribution of water in its interior.

US 5 456 931 discloses a process as well as an apparatus for the production of elongated pasta products, particularly lasagna, wherein the pasta products are formed via a pasta production apparatus in parallel lines, positioned on drying rods, dried and upon solidification, cut into packaging lengths and packed for consumer use. After cutting, the lasagna are moved, in series, via slides, and stacked in portions, of predeterminable numbers, at a conveyor. The conveyor preferably takes the form of a ring-type conveyor for the serial packaging of these portions, whereby inspections, additions and exact weight determination of these portions can be accomplished.

It is known that one of the main problems of drying of pasta relates to the transfer of its water contents from the product mass to the surface to allow the evaporation thereof.

In order to carry out this task, methods have been used to date that provide for a well-defined succession of steps used by all the manufacturers. For example, for long pasta the complete drying cycle to have good quality pasta lasts about 5-6 hours, as can be seen from the documentation of the manufacturers of drying lines.

Proper drying is obtained through the application of increasing and decreasing temperatures with ventilation, wherein the corresponding air changes effectiveness alternating dehydration zones with humidification zones by simple settling and/or with controlled humidity air for keeping the stabilisation active at alternating steps.

For example, the following steps may be identified in a drying cycle of long pasta.

A first step generally called pre-drying (first-drying) which lasts 40-45 min. wherein the mean humidity percentage of pasta changes from about 28% to 16-18%

with approximate increasing temperature from 50 to 90°C.

A second drying step that lasts about 2 h brings the mean humidity percentage of pasta to around 12-12.5%. In any case, it should be noted that the humidity percentage in the central core of pasta still remains at a higher value than the mean humidity and that of the outer surface at a lower one. A further step is therefore required, called stabilisation, which requires almost 50% of the time of the entire drying cycle to bring the humidity of the pasta core, which is more humid, towards the surface so as to level the entire mass to the desired final mean value of 12-12.5%.

Another technique is to alternate, during the entire cycle, more or less strong dehydration steps with other reconstitution steps, referring to as active stabilisation steps.

A final stabilisation step as described above is therefore required with the traditional methods because the inner zone of the pasta piece, at the end of the drying step, has a water concentration higher than the average and higher than that of the outer zone, which in turn is at a concentration below average. The mean concentration is that desired of the end product but the water concentration is unbalanced between product inside and outside.

This is the reason why the stabilisation step is required at the balance conditions: the treatment, in fact, allows stabilising or levelling at the mean concentration of all the pasta piece, that is, both the inside and the outside. This step requires a considerable time of the entire drying cycle lasting for almost half of it.

In the known drying method as described above, the stabilisation step is essential: without this step, the pasta made, once cooled, would get spoilt by the effect of the inner stresses that would arise due to the unbalance of water concentration between the inner and the outer zone. The other method that uses active stabilisation zones introduces as usual stabilisation time periods between those for drying.

These times must be considered to prevent inducing stress into the pasta structure.

Moreover, it has been found that a step of surface rehumidification of the pasta is required before the cooling step to compensate for the water loss the product surface undergoes by the effect of the evaporation induced by the quick cooling onto the surface of the same pasta, which would again generate an appreciable unbalance between inside and outside. The drying diagram used by all manufacturers of drying lines is currently characterised by a more or less quick dehydration obtained from a first pre-dying and drying step followed by another one of stabilisation, for a total time of about 5 or 6 hours for long pasta and 2 or 3 hours for short pasta.

After the stabilisation, before the cooler, all the diagrams provide for a short rehumidification step that increases the surface humidity of the product. This humidity will then be lost during the final cooling, which will return the pasta to 12-12.5%. This technology of rehumidifying the pasta before cooling was introduced in 1986 by the Applicant company in the line referred to the internal order no. 75169 of Oct./1987 and delivered to the Zara pasta factory of Riese Pio X and then adopted by all the other manufacturers of pasta lines.

The object of the present invention is to obtain a pasta having features similar to that currently produced by the various known methods, but wherein the treatment times for obtaining it are reduced, alongside especially higher mechanical resistance and stability. Another object of the present invention is to provide a high-yield, quick-drying method for long, short and speciality pasta which reduces the costs relating to the energy used and to the investments.

A further object of the present invention is to provide a high-yield, quick-drying method for long, short and speciality pasta wherein there is a simplification of the realization steps.

Another object is to prepare the pasta structure for receiving a final cooling using also ambient air, with considerable energy saving. A further object of the present invention is to provide a high-yield, quick-drying method for long, short and speciality pasta wherein the pasta in any case exhibits a high mechanical resistance and excellent cooking resistance. These and other objects according to the present invention are achieved by providing a high-yield, quick-drying method for long, short and speciality pasta as described in claim 1.

The method to be protected is based on the fact that pasta loses water according to a diagram that leads the core to 12-12.5% during the drying step and not in stabilisation.

This is the condition that allows eliminating the conventional stabilisation step that is replaced by a controlled rehumidification step that allows levelling the humidity concentration in the entire mass, adding water from the exterior.

The features and the advantages of a high-yield, quick-drying method for long, short and speciality pasta according to the present invention will appear more clearly from the following description, made by way of an indicative non-limiting example with reference to the annexed schematic drawings, wherein:
- figure 1 shows a cutaway view of a schematisation of a pasta piece, in the specific case spaghetti or long pasta;
- figure 2 shows a diagram illustrating the method according to the invention in relation to the realization time thereof, to the temperature and to the approximate percentage of humidity in the long pasta of figure 1;

- figure 3 shows a cutaway view of a schematisation of a pasta piece, in the specific case short pasta; and
- figure 4 shows a diagram illustrating the method according to the invention in relation to the realization time thereof, to the temperature and to the approximate percentage of humidity in the short pasta of figure 3.

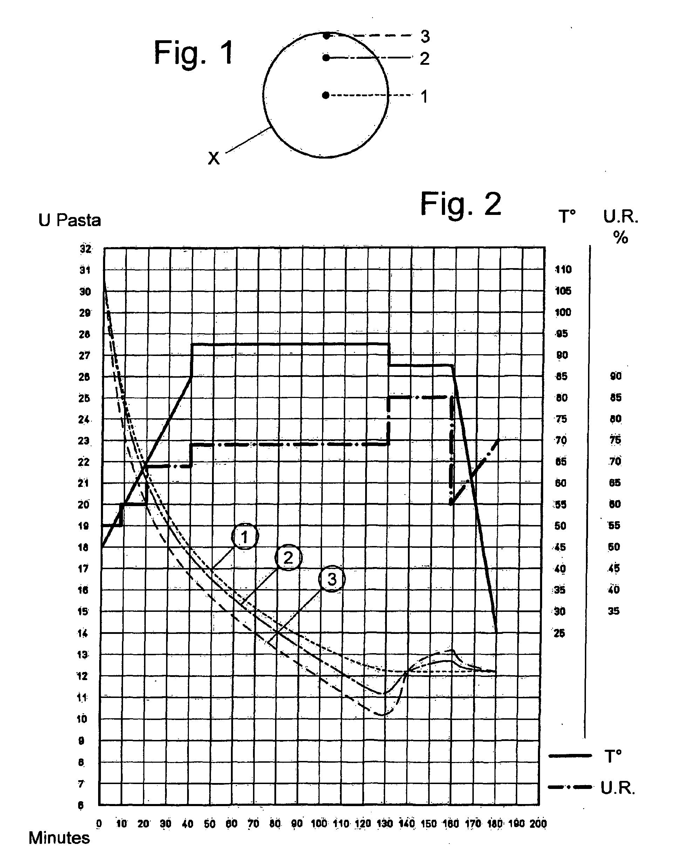

With reference to figure 2, there is shown a diagram that shows the high-yield quick-drying method according to the invention, in the example for long pasta.

The diagram shows three curves that represent the conditions of an inside zone 1, an intermediate zone 2 and an outer zone 3 in a pasta piece X, for example spaghetti shown in cutaway view, shown in figure 1.

The high-yield, quick-drying method for long and short pasta according to the invention has found that the settling and active or simple stabilisation steps present in the prior art may be eliminated because at this point they are and would only cause an increase of time and cost.

According to the invention, the normal pre-drying and drying diagrams may be used for bringing the pasta, in the most efficient and quick manner, to a humidity value in the core which is equal to the desired end mean value of dry pasta, that is, already stabilised, for example to the value of 12-12.5% (pasta humidity indicated on the ordinate).

After this step, irrespective of the more or less accelerated diagram used for reaching this condition, pasta will always have a wetter core than the outer surface, but with a core value equal to or less than 12.5%.

Afterwards, a controlled humidification step has been introduced wherein water is added to the mass up to reaching the mean humidity value in pasta equal to the final value of 12-12.5% and continuing to add more surface water as needed to prepare it for the final cooling, operation wherein a certain percentage of surface humidity is lost.

The duration of this step is about 30-50 min. and serves for levelling the humidity value to the desired mean one, the pasta core already being at the end balance humidity. This step replaces the conventional stabilisation step and/or active stabilisation steps. This is a step wherein the pasta is forcedly rehumidified for a short time in air at a suitable relative humidity (as shown in the graph by line U.R. of figure 2), so as to ensure that the humidity of the outer portion of the product is higher than the inner portion or core.

For long pasta, as is shown in figure 2, at first for about 30 minutes the air increases its relative humidity with an almost constant increase of temperature T°, then they are both kept constant for about 100 minutes. In the final part, the relative humidity of the air undergoes variations by excess or shortage, whereas temperature is decreased and then it undergoes a drastic reduction in a time of about 20 minutes so as to play an active role in the treatment of pasta according to the invention. A surface rehumidification of the pasta is thus obtained, which is required for compensating for the water loss the product surface undergoes by the effect of the evaporation induced by the quick cooling onto the surface of the same pasta during the cooling.

In this way, the pasta is made to absorb a water amount suitable for rebalancing the lower humidity of the outer portion with that already final of the core, plus the portion required for the surface evaporation that occurs in the subsequent cooling step. By this single treatment, the entire mass of pasta is rebalanced aggregating also an amount of water higher than 12.5% to the outer portion of the piece. As said, in this way the stabilisation step is eliminated completely, reducing the end surface rehumidification step to about 30 min., during which all the stresses caused by the drying are eliminated. At the same time, the amount of water required for compensating the surface water loss in the cooling step is also added, step which is to be carried out according to the conventional criteria.

Thanks to the deeper and more balanced rehumidification it is also possible to use a cooling system in ambient air in the subsequent pasta cooling step.

It should be noted that in the cooling step of long pasta, ambient air is not normally used so that using provides a great economic advantage for the large amount of energy saved in the chiller.

A method according to the invention for long pasta is therefore reduced to about 3 hours or 180 minutes.

The graph in figure 2 shows the temperatures at which the innovative treatment of the invention is carried out, and what the relative humidity of the air and its variations are in the various treatment steps over the time.

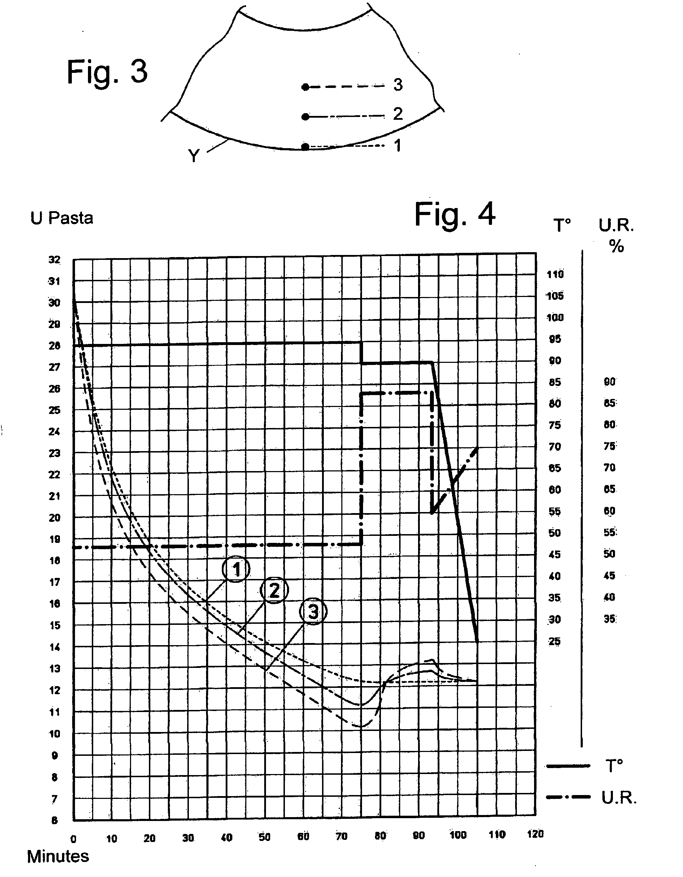

In the case of short pasta, as shown in figures 3 and 4, tests performed have shown that the time may even be reduced to 1 hour and 5 min overall according to the size.

The graph in figure 4 shows the temperatures and the relative humidity of the air at which the innovative treatment of the invention is carried out. In the case of short pasta, temperature T° is kept constant for about 70-80 minutes to then be decreased and undergo a quick cooling for less than 20 min. The relative humidity of the air is also kept constant for about 70-80 minutes to then be increased and decreased to have an active role in the treatment of pasta. Also in this case, a surface rehumidification of the pasta is thus obtained, which is required for compensating for the water loss the product surface undergoes by the effect of the evaporation induced by the quick cooling onto the surface of the same pasta during the cooling. Using this new method there are structural modifications of a certain importance which occur in the product.

A higher product strength and elasticity than obtained with the conventional drying techniques is thus observed. This condition is especially favourable for the subsequent product packaging step.

As side advantages there is a considerable energy saving, thanks to the reduced total time and thus to the reduced total surface of the drier.

The production line is more compact as the space required is considerably smaller.

As an indication, curves 1, 2 and 3 in figure 2 show the humidity percentage of pasta in the various steps of the drying and cooling cycle of the method of the present invention described above, for the equivalent zones 1, 2, and 3 of long pasta (X) of figure 1.

The same applies to the similar zones 1, 2 and 3 of short pasta (Y) of figure 3.

The overall treatment time is almost halved compared to the methods currently used.

The advantages of a method according to the present invention therefore are clear.

The above description relating to long pasta is equally valid for short pasta and speciality: in the practice, the time of the entire drying cycle currently used in the prior art methods and equipment mentioned in the preamble of the description is about halved.

## Claims

1. Method for drying long, short and speciality pasta provided with a core (1), an outer area (3) and an intermediate area (2) between said core (1) and said outer area (3); said method comprises the steps in succession of:
a) drying the pasta until it reaches a dryness less than or equal to 12-12.5% humidity;
b) humidificating the pasta as obtained in the first drying step;
c) cooling the pasta as obtained in the second humidificating step;
**characterised in that**:
during the humidificating and cooling steps the humidity of said core (1) is constant and comprised between 12-12.5%;
and **in that**:
d) said drying step is performed until:
- said core (1) reaches a dryness between 12-12.5% humidity;
- said intermediate area (2) reaches a dryness less than 12% humidity;
- said outer area (3) reaches a dryness less than said intermediate area (2);
e) said humidification step is performed until:
- said outer area (3) and said intermediate area (2) reach a dryness more than said core (1); and
- said outer area (3) reaches a dryness more than said intermediate area (2);
f) said cooling step is performed until:
- said outer area (3), said intermediate area (2) and said core (1) have a dryness between 12-12.5% humidity.

## Patentansprüche

1. Verfahren zum Trocknen von Lang-, Kurz- und Sonderteigwaren, die mit einem Kern (1), einem Außenbereich (3) und einem Zwischenbereich (2) zwischen diesem Kern (1) und diesem Außenbereich (3) versehen sind; wobei dieses Verfahren die folgenden aufeinanderfolgenden Schritte umfasst:
a) Trocknen der Teigwaren, bis sie eine Trockenheit von weniger oder gleich 12-12,5% Feuchtigkeit erreichen;
b) Befeuchten der Teigwaren, wie sie im ersten Trocknungsschritt erhalten wurden;
c) Kühlen der Teigwaren, wie sie im zweiten Befeuchtungsschritt erhalten wurden; **dadurch gekennzeichnet, dass**:
während der Befeuchtungs- und Kühlschritte die Feuchtigkeit des Kerns (1) konstant ist und zwischen 12-12,5% beträgt;
und dadurch, dass:
d) der Trocknungsschritt ausgeführt wird, bis:
- der Kern (1) eine Trockenheit zwischen 12-12,5% Feuchtigkeit erreicht;
- der Zwischenbereich (2) eine Trockenheit von weniger als 12% Feuchtigkeit erreicht;
- der Außenbereich (3) eine geringere Trockenheit als der Zwischenbereich (2) erreicht;
e) der Befeuchtungsschritt ausgeführt wird, bis:
- der Außenbereich (3) und der Zwischenbereich (2) eine höhere Trockenheit als der Kern (1) erreichen; und
- der Außenbereich (3) eine höhere Trockenheit als der Zwischenbereich (2) erreicht;
f) der Kühlschritt ausgeführt wird, bis:
- der Außenbereich (3), der Zwischenbereich (2) und der Kern (1) eine Trockenheit zwischen 12-12,5% Feuchtigkeit haben.

## Revendications

1. Procédé pour sécher des pâtes longues, courtes et de spécialité munies d'un coeur (1), d'une zone extérieure (3) et d'une zone intermédiaire (2) entre ledit coeur (1) et ladite zone extérieure (3) ; ledit procédé comprend en succession les étapes de:
a) le séchage des pâtes jusqu'à ce qu'elles atteignent une sécheresse inférieure ou égale à 12-12,5% d'humidité ;
b) l'humidification des pâtes telles qu'obtenues dans la première étape de séchage ;
c) le refroidissement des pâtes telles qu'obtenues dans la deuxième étape d'humidification ;
**caractérisé en ce que** :
durant les étapes d'humidification et de refroidissement,
l'humidité dudit coeur (1) est constante et comprise entre 12 et 12,5% ;
et **en ce que** :
d) ladite étape de séchage est effectuée jusqu'à ce que :
- ledit coeur (1) atteigne une sécheresse entre 12 et 12,5% d'humidité ;
- ladite zone intermédiaire (2) atteigne une sécheresse inférieure à 12% d'humidité ;
- ladite zone extérieure (3) atteigne une sécheresse inférieure à celle de ladite zone intermédiaire (2) ;
e) ladite étape d'humidification est effectuée jusqu'à ce que :
- ladite zone extérieure (3) et ladite zone intermédiaire (2) atteigne une sécheresse supérieure à celle dudit coeur (1) ; et
- ladite zone extérieure (3) atteigne une sécheresse supérieure à celle de ladite zone intermédiaire (2) ;
f) ladite étape de refroidissement est effectuée jusqu'à ce que :
- ladite zone extérieure (3), ladite zone intermédiaire (2) et ledit coeur (1) aient une sécheresse entre 12 et 12,5% d'humidité.
